Europäisches Patentamt

European Patent Office

Office européen des brevets

(11) Numéro de publication: **0 222 951**
**A1**

# (12) DEMANDE DE BREVET EUROPEEN

(21) Numéro de dépôt: **85401875.1**

(22) Date de dépôt: **25.09.85**

(51) Int. Cl.⁴: **B23B 27/04**

(43) Date de publication de la demande:
**27.05.87 Bulletin 87/22**

(84) Etats contractants désignés:
**AT BE CH DE GB IT LI LU NL SE**

(71) Demandeur: **CARBEX, Société Anonyme**
**B.P. 111 - Rue de la Fonderie**
**F-71203 Le Creusot Cedex(FR)**

(72) Inventeur: **Mineo, Antonio**
**235, rue Sénéchal**
**F-59163 Condé-sur-l'Escaut(FR)**

(74) Mandataire: **Morash, Daniel**
**17, Avenue La Bruyère**
**F-78160 Marly-le-Roi(FR)**

(54) **Plaquette de coupe.**

(57) Plaquette de coupe remarquable en ce que sa surface d'attaque (20) est réalisée sous forme au moins d'une partie (20₁,20₂) concave située derrière l'arête tranchante (10), au moins une protubérance - (11,12,13) étant disposée dans ladite partie concave (20₁,20₂) à une faible distance de ladite arête tranchante (10).

FIG.1

FIG.1a

FIG.1c

FIG.1d

FIG.1b

## PLAQUETTE DE COUPE

. La présente invention concerne une plaquette de coupe permettant, lors de l'usinage, une excellente formation et évacuation des copeaux pour des gammes importantes des avances de l'outil (ou de la pièce à usiner), des vitesses de coupe et des profondeurs de coupe, pour un outil ou une plaquette donnée.

Les plaquettes des coupes connues jusqu'alors ne permettent pas une formation et évacuation efficaces des copeaux, notamment à des grandes vitesses de coupe. Il en résulte une usure prématurée de la plaquette, souvent la création de vibrations nuisibles qui peuvent être la cause d'imprécisions du travail d'usinage effectué. Egalement, la puissance absorbée par l'utilisation de brise-copeaux connus peut devenir excessive et, par conséquent, nécessiter un apport d'énergie pour l'usinage.

La présente invention a pour objet de pallier à ces inconvénients. Les plaquettes selon l'invention peuvent être rapportées par brasage, soudure, crinitage ou par fixation mécanique, tel que, par exemple, par l'autoblocage de la plaquette dans un logement du porte-outil; cet autoblocage est rendu possible par la configuration en coin de la plaquette; il s'effectue, de façon connue en soi, par le coincement de la plaquette dans le logement du porte-outil, cet effet s'amplifiant par la pression de coupe lors de l'usinage; l'autoblocage de la plaquette peut s'effectuer dans un logement - (divergent) rigide ou au moins partiellement élastique.

La plaquette de coupe conforme à l'invention est caractérisée en ce que sa surface d'attaque est réalisée sous forme au moins d'une partie concave située derrière l'arête tranchante, au moins une protubérance étant disposée dans ladite partie concave à une faible distance de ladite arête tranchante.

Ladite protubérance (ou lesdites protubérances) fait (font) partie intégrale de ladite première partie concave de la surface d'attaque.

Selon un mode de réalisation, une seule protubérance est disposée dans l'axe longitudinal x -x, cette protubérance pouvant être réalisée sous forme d'une sphère, sous forme d'une partie d'une sphère, sous une forme d'un cylindre ou d'une partie d'un cylindre aux extrémités arrondies, ou sous forme d'un ovoïde ou d'une partie d'un ovoïde dont la partie élargie constitue son extrémité la plus éloignée de l'arête tranchante.

Selon un autre mode de réalisation, au moins deux protubérances réalisées sous forme au moins d'une sphère, sous forme d'au moins une partie d'une sphère, sous forme au moins d'un cylindre, sous forme au moins d'une partie de cylindre aux extrémités arron dies, sous forme au moins d'un ovoïde, au moins d'une partie d'un ovoïde dont la partie élargie constitue son extrémité la plus éloignée de l'arête tranchante.

Sa surface d'attaque peut être réalisée par une première partie concave suivie d'une deuxième partie concave, ladite (ou lesdites) protubérance(s) étant disposées sur ladite première partie.

La courbure de ladite première partie concave peut être différente de la courbure de ladite deuxième partie concave.

Les deux bords latéraux de ladite surface d'attaque peuvent être réalisés sous forme de nervures qui s'étendent à partir de l'arête tranchante ou d'une faible distance de ladite arête tranchante vers l'arrière et dont la hauteur maximale est supérieure à la hauteur de ladite (ou des) protubérance(s).

Les faces intérieures desdites nervures sont inclinées par rapport à un plan vertical au plan longitudinal de la plaquette d'un angle pouvant prendre des valeurs entre 25° et 35°; lesdites faces rejoignent ladite surface d'attaque à une distance telle du bord de la (ou des) protubérance(s) que le déroulement le plus efficace du copeau soit assuré, lors de l'opération de coupe.

La plaquette est rapportée et réalisée de façon à être autobloquante par coincement dans un logenient d'un porte-outil, de façon connue en soi, grâce à sa configuration géométrique en forme de coin, le montage de la plaquette dans le porte-outil s'effectuant par le glissement de sa partie conique dans le logement du porte-outil par les bords de ladite plaquette ayant des surfaces en forme de "V" qui coopèrent avec des surfaces ayant une forme appropriée des bords du logement du porte-outil.

L"angle des "V" desdits bords est entre 137,5° et 142,5°.

Les surfaces en forme de "V" desdits bords sont concaves et coopèrent avec des surfaces en forme de "V" convexes ou des guides sphériques ou analogues constituant les bords des logements du porte-outil.

La partie arrière de la base comprenant lesdites surfaces en forme de "V" de ladite plaquette est arrondie pour faciliter l'introduction de la plaquette dans le logement du porte-outil.

D'autres caractéristiques et avantages ressortiront du texte suivant et des figures y afférentes, donnés à titre d'exemples uniquement.

La figure 1 montre une vue de face d'un mode de réalisation d'une plaquette de coupe ;

Les figures 1d, 1a, 1b et 1c montrent une vue du dessus de la plaquette, et les sections A -A, B -B, C -C ;

La figure 2 montre, fortement agrandie en coupe, selon l'axe longitudinal x -x de la plaquette, sa surface d'attaque ;

La figure 2a montre, fortement agrandie en coupe, la section A -A de la figure 2.

Les figures 3 et 3d montrent une coupe partielle longitudinale et une vue du dessus d'un deuxième mode de réalisation de la plaquette, et

Les figures 4 et 4d montrent une coupe partielle longitudinale et une vue du dessus d'un troisième mode de réalisation de la plaquette.

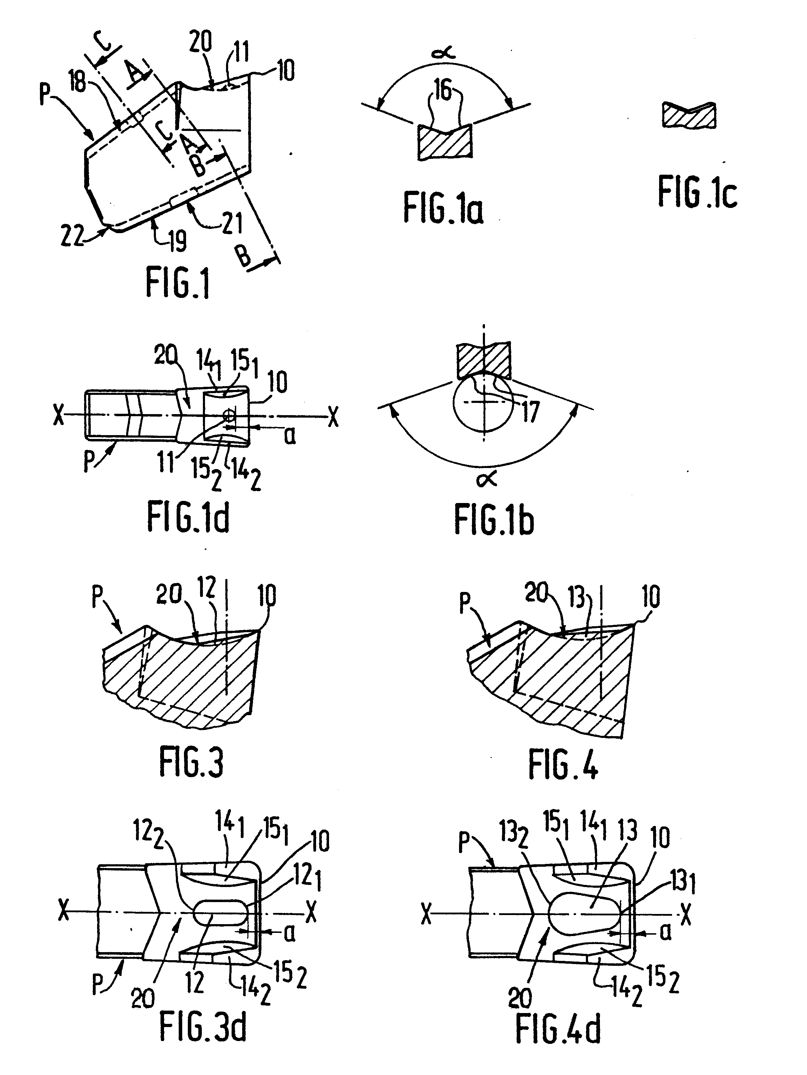

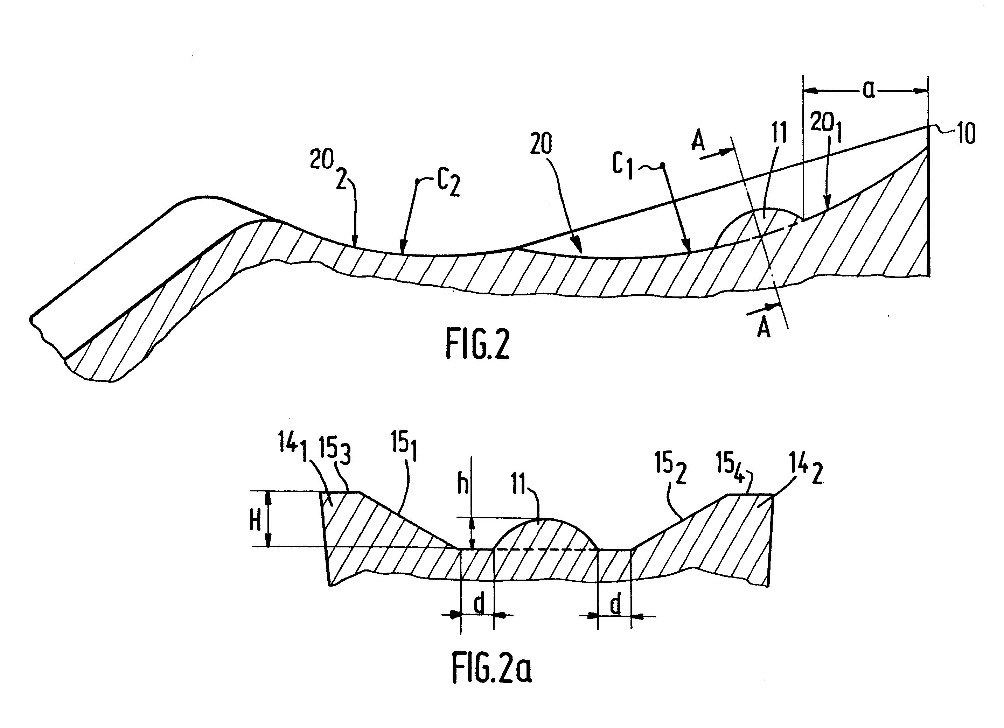

La plaquette (P) montrée dans les figures 1,1a,1b.1c, 1d, 2 et 2a est une plaquette rapportée autobloquante. Les bords supérieur (18) et inférieur (19) de la plaquette convergent (vers le côté gauche du dessin) en s'éloignant de l'arête tranchante (10), l'angle de convergence étant choisi de façon à obtenir un coincement efficace dans le logement du porte outil (non montré dans les dessins). La surface d'attaque (20) de la plaquette (P) est réalisée sous forme de deux parties concaves (20$_1$, 20$_2$). Ces parties peuvent être généralement sphériques ou encore avoir des formes autres que sphériques, sans pour autant sortir du cadre de l'invention. Les courbures (C$_1$, C$_2$) desdites parties concaves (20$_1$, 20$_2$) peuvent. être identiques ou différentes. En effet, la forme, la longueur et la courbure de chaque partie (20$_1$,20$_2$) concave sont déterminées en fonction de la configuration désirée du copeau pour permettre son évacuation facile et efficace. Ainsi, peut-on, dans certains cas, ne prévoir qu'une seule partie concave (20$_1$) qui s'étend à partir de l'arête tranchante (10) vers l'arrière de la plaquette (P). Pour diminuer la puissance absorbée lors de l'usinage, il est avantageux d'effectuer la formation du copeau, lors de l'usinage, pendant qu'il est encore chaud, en diminuant sa largeur par rapport à la largeur de l'arête tranchante (10) et en lui donnant une configuration qui permet son évacuation facile et régulière. Conformément à l'invention, ce but est atteint en réalisant la partie concave (20$_1$) située directement derrière l'arête tranchante (10) de façon à ce qu'une protubérance (11,12,13) soit disposée sur ladite partie (20$_1$) à une faible distance (a) de l'arête tranchante (10); cette disposition peut être avantageusement combinée avec des nervures (14$_1$, 14$_2$) situées de part et d'autre de la surface d'attaque (20). Ladite protubérance (11,12,13) et/ou lesdites nervures (14$_1$, 14$_2$) peuvent être des parties intégrales de la plaquette (P) ou encore être rapportées par brasage, soudure, etc... Les nervures (14$_1$, 14$_2$) sont com posées d'une partie supérieure plane (15$_3$, 15$_4$) et d'un plan incliné (15$_1$, 15$_2$) d'environ 30° par rapport au plan horizontal des parties (15$_3$, 15$_4$) susmentionées qui rejoint la partie concave (20$_1$) de la surface d'attaque (20) à une relativement faible distance (d) de la protubérance (11,12,13). La hauteur maximale des nervures (H) est supérieure à la hauteur (h) de ladite protubérance (11,12,13). La protubérance -(11,12,13) avec, éventuellement, en combinaison avec les nervures (14$_1$, 14$_2$) disposées sur une partie concave (20$_1$) de la surface d'attaque (20) contraint les copeaux à se restreindre, lors de l'usinage, et permet ainsi l'obtention des copeaux bien formés et comparativement étroits qui s'évacuent facilement de la saignée durant l'opération d'usinage. Il est dans le cadre de l'invention de prévoir au moins deux protubérances sur la partie concave (20$_1$) de la surface d'attaque -(20), par exemple en ligne ; l'une derrière l'autre; ou encore en parallèle, en triangle, en quinconce ; etc.., en fonction du travail à effectuer, de la grandeur de la plaquette, etc... La protubérance (ou les protubérances) peuvent avoir les formes les plus diverses : à titre d'exemple, dans les figures 1,1d,2 et 2a il est montré une protubérance (11) qui a la forme d'une partie d'une sphère. Dans les figures 3, 3a, la protubérance (12) a la forme d'un cylindre partiel dont les extrémités (12$_1$, 12$_2$) sont arrondies. Les figures 4 et 4d montrent une protubérance -(13) partiellement ovoïde, dont l'extrémité large -(13$_2$) est plus éloignée de l'arête tranchante (10) que l'extrémité mince (13$_1$). Les extrémités (13$_1$, 13$_2$) sont également arrondies en courbes. D'autres formes peuvent être imaginées pour les protubérances sans pour autant sortir du cadre de l'invention.

Le coincement de la plaquette (P) dans le logement du porte outil (non montré dans les dessins) s'effectue en introduisant la plaquette dans ledit logement par son extrémité arrière; le logement est divergent, tandis que la plaquette est convergente, les angles de divergence et de convergence étant pratiquement identiques. Pour assurer une introduction précise et un maintien ferme de la plaquette (P) dans le logement du porte-outil, les bords convergents (18,19) sont réalisés sous forme de deux surfaces (16,17) en "V" qui coopèrent avec des surfaces en "V" correspondant aux bords du logement du porte-outil.

L'angle α du "V" varie entre 137,5 et 142,5°. En effet, l'expérience de la demanderesse a prouvé qu'un angle de 140° environ facilite grandement l'introduction de la plaquette (P) dans ledit logement et améliore sensiblement son maintien et son autoblocage. Les bords du loge ment susmentionné peuvent être également réalisés sous forme sphérique ou analogue, par exemple, si le maintien rigide de la plaquette est assuré; par exemple dans le cas d'une opération d'usinage qui ne nécessite pas une pression de coupe excessive. En outre, les surfaces (16,17) des bords (18,19) peuvent être concaves ou encore convexes. Dans ce dernier cas, évidemment, les bords du logement sont de préférence en forme de "V" concave.

L'introduction de la plaquette (P) dans le logement du porte-outil est encore facilitée en arrondissant la partie arrière (22) de la base (21) comprenant lesdites surfaces (16,17) en forme de "V" de la plaquette (P) (Voir Fig. 1).

De nombreuses modifications et améliorations peuvent être apportées à ces plaquettes de coupe rapportées sans pour autant sortir du cadre de l'invention. Ainsi, peut-on réaliser des outils de coupe en une pièce (sans plaquettes rapportées) dont la surface d'attaque est pourvue d'au moins une protubérance et, éventuellement, des nervures latérales.

## Revendications

1.) Plaquette de coupe, caractérisée en ce que sa surface d'attaque (20) est réalisée sous forme au moins d'une partie (20₁,20₂) concave située derrière l'arête tranchante (10), au moins une protubérance (11,12,13) étant disposée dans ladite partie concave (20₁,20₂) à une faible distance de ladite arête tranchante (10).

2.) Plaquette de coupe selon la revendication 1, caractérisée en ce que ladite protubérance - (11,12,13) (ou lesdites protubérances) fait (font) partie intégrale de ladite première partie concave (20₁) de la surface d'attaque (20).

3.) Plaquette de coupe selon l'une des revendications 1 ou 2, caractérisée en ce qu'une seule protubérance (11,12,13) est disposée dans l'axe longitudinal x -x, cette protubérance pouvant être réalisée sous forme d'une sphére, sous forme d'une partie d'une sphère (11), sous une forme d'un cylindre ou d'une partie d'un cylindre (12) aux extrémités (12₁,12₂) arrondies, ou sous forme d'un ovoïde ou d'une partie d'un ovoïde (13) dont la partie élargie (13₂) constitue son extrémité la plus éloignée de l'arête tranchante (10).

4.) Plaquette de coupe selon l'une des revendications 1 ou 2, caractérisée en ce qu'au moins deux protubérances (11,12,13) réalisées sous forme au moins d'une sphère, sous forme d'au moins une partie d'une sphère (11), sous forme au moins d'un cylindre, sous forme au moins d'une partie de cylindre (12) aux extrémités arrondies, sous forme au moins d'un ovoïde, au moins d'une partie d'un ovoïde (13) dont la partie élargie (13₂) constitue son extrémité la plus éloignée de l'arête tranchante (10).

5.) Plaquette de coupe selon l'une des revendications précédentes, caractérisée en ce que sa surface d'attaque (20) est réalisée par une première partie concave (20₁) suivie d'une deuxième partie concave (20₂), ladite (ou lesdites) protubérance(s) (11,12,13) étant disposées sur ladite première partie (20₁).

6.) Plaquette selon la revendication 5, caractérisée en ce que la courbure (C₁) de ladite première partie concave (20₁) est différente de la courbure (C₂) de ladite deuxième partie concave (20₂).

7.) Plaquette selon l'une des revendications précédentes, caractérisée en ce que les deux bords latéraux de ladite surface d'attaque (10) sont réalisés sous forme de nervures (14₁,14₂) qui s'étendent à partir de l'arête tranchante (10) ou d'une faible distance de ladite arête tranchante - (10) vers l'arrière et dont la hauteur (H) maximale est supérieure à la hauteur (h) de ladite (ou des) protubérance(s) (11,12,13).

8.) Plaquette selon la revendication 7, caractérisée en ce que les faces intérieures (15₁, 15₂) desdites nervures (14₁,14₂) dont inclinées par rapport à un plan vertical au plan logitudinal de la plaquette d'un angle pouvant prendre des valeurs entre 25° et 35°; lesdites faces (15₁,15₂) rejoignent ladite surface d'attaque (20) à une distance (a) telle du bord de la (ou des) protubérance(s) (11,12,13) que le déroulement le plus efficace du copeau soit assuré lors de l'opération de coupe.

9.) Plaquette selon l'une des revendications précédentes, caractérisée en ce qu'elle est rapportée et réalisée de façon à être autobloquante par coincement dans un logement d'un porte-outil, de façon connue en soi, grâce à sa configuration géométrique en forme de coin, le montage de la plaquette (P) dans le porte-outil s'effectuant par le glissement de sa partie conique dans le logement du porte-outil par les bords (18,19) de ladite plaquette (P) ayant des surfaces (16,17) en forme de "V" qui coopèrent avec des surfaces ayant une forme appropriée des bords du logement du porte-outil.

10.) Plaquette rapportée selon la revendication 9, caractérisée en ce que l'angle (α) des "V" desdits bords (18,19) est entre 137,5° et 142,5°.

11.) Plaquette rapportée selon la revendication 10, caractérisée en ce que la surface en forme de "V" desdits bords (18,19) sont concaves et coopèrent avec des surfaces en forme de "V" convexes où des guides sphériques ou analogues constituant les bords du logement du porte-outil.

12.) Plaquette rapportée selon l'une des revendications 9 à 11, caractérisée en ce que la partie arrière (22a) de la base (21) comprenant lesdites surfaces (16,17) en forme de "V" de ladite plaquette (P) est arrondie pour faciliter l'introduction de la plaquette (P) dans le logement du porte-outil.

FIG.1a

FIG.1c

FIG.1

FIG.1d

FIG.1b

FIG.3

FIG.4

FIG.3d

FIG.4d

FIG.2

FIG.2a

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-2 940 328  (SUMITOMO)  <br><br>* Page 6; figures 8-10 * | 1-3,5, 6 | B 23 B    27/04 |
| X | METALWORKING PRODUCTION, vol. 127, no. 5, mai 1983, pages 60-61, Morgan Grampion Ltd., Londres, GB; K.J.A. BROOKES: "Never mind the chip look at the grip" <br>* Pages 60-61; figure 2 * | 1,5-11 | |
| X | EP-A-0 059 602  (ISCAR) <br>*  Page 7, lignes 11-18; page 10, lignes 17-25; figures 2,7 * | 1,5-11 | |
|  | ----- | | |

DOMAINES TECHNIQUES
RECHERCHES (Int. Cl.4)

B 23 B    27/00
B 23 B    29/00

Le présent rapport de recherche a été établi pour toutes les revendications

| Lieu de la recherche <br>LA HAYE | Date d'achèvement de la recherche <br>28-05-1986 | Examinateur <br>BOGAERT F.L. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82